# EUROPEAN PATENT APPLICATION

(11) **EP 4 207 100 A1**
(43) Date of publication of application: **05.07.2023**
(21) Application number: 22217121.7
(22) Date of filing: 29.12.2022
(51) Int. Cl.: G06V 20/20, G06V 20/70

(54) **METHOD AND SYSTEM FOR PROVIDING USER INTERFACE FOR MAP TARGET CREATION**

(30) Priority: 30.12.2021 KR 20210192571
(71) Applicant: Virnect, Co., Ltd., Seoul 04379 (KR)
(72) Inventor: KIM, Ki Young, 04379 Seoul (KR); PARK, Noh Young, 10867 Paju-si, Gyeonggi-do (KR)
(74) Representative: BCKIP Part mbB

(57) **Abstract**

A method of providing a user interface for map target creation according to one embodiment of the present disclosure, in which a map target application executed by at least one processor of a terminal provides the user interface for map target creation, includes: acquiring an image captured by photographing a 3D space; extracting a key frame of the captured image; detecting feature points in the extracted key frame; generating a 3D map based on the detected feature points; generating object information including class information and object area information for at least one key object in the key frame; mapping the generated object information to the 3D map; displaying the object information mapped on the 3D map; and providing an object function setting interface based on the 3D map.

## Description

### CROSS-REFERENCE TO RELATED APPLICATIONS

This Application claims the benefit of Koran Patent Application No. 10-2021-0192571, filed on December 30, 2021 before the Korean Intellectual Property Office.

### BACKGROUND OF THE INVENTION

### Technical Field

The present disclosure relates to a method and system for providing a user interface for map target creation. More specifically, the present disclosure relates to a method and system for providing a user interface for map target creation, which provides a 3D map including at least one object classified and displayed in units of physical meaning, and sets an object-based function operation based on the provided 3D map.

### Related Art

In the field of computer vision and robotics, there is often a need to build representations of 3D space.

Building a representation of a three-dimensional space allows a real-environment to be mapped into virtual and digital realms, where these realms can be used and manipulated in electronic devices.

For example, a movable robotic device may require a representation of a 3D space to allow simultaneous positioning and mapping, and thus navigation of its environment.

Further, the representation of a 3D space may allow objects within the space to be identified and/or tracked.

A 3D map representing such a 3D space is mainly implemented using a map target, that is, a simultaneous localization and mapping (SLAM) algorithm.

Specifically, the SLAM algorithm refers to a robot algorithm through which while moving in an arbitrary 3D space whose information is not known, a robot senses the surrounding environment in the 3D space using a given sensor, creates a map for the 3D space based on the sensed information, and estimates the current location.

More specifically, in the SLAM, the robot moves and scans the surrounding 3D space using various sensors (e.g., an image sensor, a LiDAR sensor, and/or a RADAR sensor), and recognizes the corresponding 3D space while detecting landmarks (e.g., objects and/or feature points of objects, etc.) in the scanned image according to the change in position of the sensor performing the scanning.

That is, the robot can create a 3D map recognizing the 3D space while moving and mapping the location of the sensor and the location of the landmark in the scanned 3D space.

Using the 3D map generated in this way, the current position in a certain 3D space can be grasped or various functional operations for a specific object existing in the 3D space (e.g., augmented reality content output and/or a predetermined waypoint designation, etc.) can be implemented.

However, in the conventional art, there is a limitation in that it is difficult to detect and/or track a specific object (or specific object type) to implement a certain functional operation within the 3D space.

Specifically, in the conventional method, since the vast amount of features detected in the corresponding 3D space are collected as a point cloud and the 3D space is mapped, it is difficult to distinguish only the specific features of a specific object (or object type).

Accordingly, new technologies are needed to overcome and solve these conventional limitations.

### SUMMARY

The present disclosure provides a method and system for providing a user interface for map target creation that provides a 3D map including at least one object classified and displayed in units of physical meaning, and sets an object-based function operation based on the provided 3D map.

Specifically, the present disclosure maps objects for each predetermined feature point group in the 3D map and implements the 3D map that provides information on categories (types) of the objects and/or an area occupied by each of the objects.

In addition, the present disclosure provides a user interface capable of setting various object-based functional operations based on the 3D map.

However, the objects to be achieved by the present disclosure and the embodiments of the present disclosure are not limited to the objects described above, and other objects may exist.

A method of providing a user interface for map target creation according to one embodiment of the present disclosure, in which a map target application executed by at least one processor of a terminal provides the user interface for map target creation, comprises: acquiring an image captured by photographing a 3D space; extracting a key frame of the captured image; detecting feature points in the extracted key frame; generating a 3D map based on the detected feature points; generating object information including class information and object area information for at least one key object in the key frame; mapping the generated object information to the 3D map; displaying the object information mapped on the 3D map; and providing an object function setting interface based on the 3D map.

In this case, the object function setting interface is a user interface for selecting a specific object or an object of a specific class from among map objects in the 3D map and setting a function operation based on the selected map object.

Further, the extracting of the key frame includes extracting a multi-view key frame according to a positional change of a sensor that senses the 3D space.

Further, the generating of the object information includes generating object information for each key object by performing semantic segmentation based on the key frame.

Further, the mapping of the object information to the 3D map includes: detecting a first map object corresponding to a first key object; and mapping the detected first map object and object information of the first key object.

In addition, the mapping of the object information to the 3D map further includes: extracting a first feature point group constituting the first map object from among a plurality of feature points in the 3D map; and mapping the extracted first feature point group and the object information of the first key object.

Further, the displaying of the object information mapped on the 3D map includes displaying the object information by classifying the object information according to object information mapped to each map object in the 3D map.

The method of providing a user interface for map target creation according to one embodiment of the present disclosure, further comprises executing a map object-based functional operation set through the object function setting interface.

A system for providing a user interface for map target creation according to one embodiment of the present disclosure, comprises: at least one display for outputting a 3D map; at least one memory; at least one processor; and at least one application stored in the memory and executed by the processor to provide the user interface for map target creation, wherein the at least one application is operated to: acquire an image captured by photographing a 3D space; extract a key frame of the captured image; detect feature points in the extracted key frame; generate a 3D map based on the detected feature points; generate object information including class information and object area information for each key object in the key frame; map the generated object information to the 3D map; display the object information mapped on the 3D map; and provide an object function setting interface based on the 3D map.

In this case, the application is operated to extract a multi-view key frame according to a positional change of a sensor that senses the 3D space.

The method and system for providing a user interface for map target creation according to one embodiment of the present disclosure can implement various 3D map-based application services (e.g., a target object detection/tracking service, an augmented reality content providing service, and/or a map target (SLAM) service, etc.) based on a more intuitive and clear user interface by providing a 3D map including at least one object classified and displayed in units of physical meaning, and setting the object-based functional operation based on the provided 3D map.

In addition, the method and system for providing a user interface for map target creation according to one embodiment of the present disclosure can improve process performance when detecting and/or tracking a specific object (or specific object type) in a 3D map by mapping objects for each feature point group in the 3D map and implementing the 3D map that provides information on the categories (types) of the objects and/or an area occupied by each of the objects.

Further, the method and system for providing a user interface for map target creation according to one embodiment of the present disclosure can allow a user to easily classify the objects in the 3D map, easily select a desired specific object (or specific object type), and set the functional operation based on the selected object by providing a user interface capable of setting various object-based functional operations based on the 3D map.

However, the effects obtainable in the present disclosure are not limited to the effects mentioned above, and other effects not mentioned may be clearly understood from the following descriptions.

### BRIEF DESCRIPTION OF THE DRAWINGS

FIG. 1 is a conceptual diagram of a system for providing a user interface for map target creation according to one embodiment of the present disclosure.
FIG. 2 is an internal block diagram of a terminal according to one embodiment of the present disclosure.
FIG. 3 is an internal block diagram of a robot according to one embodiment of the present disclosure.
FIG. 4 is a flowchart illustrating a method of providing a user interface for map target creation according to one embodiment of the present disclosure.
FIG. 5 is an example of a diagram for explaining a multi-view key frame according to one embodiment of the present disclosure.

### DESCRIPTION OF EXEMPLARY EMBODIMENTS

Various modifications may be made to the present disclosure, and the present disclosure may have various embodiments, specific embodiments of the present disclosure will be illustrated in the drawings and described in detail in the detailed description. Effects and features of the present disclosure, and methods for achieving them will become clear with reference to the embodiments described later in detail together with the drawings. However, the present disclosure is not limited to the embodiments disclosed below and may be implemented in various forms. In the following embodiments, terms such as first and second are used for the purpose of distinguishing one component from another component rather than limiting meaning. Further, the singular expression include plural expressions unless the context clearly indicates otherwise. In addition, terms such as comprise, include or have mean that features or component described in the specification exist, and do not preclude the possibility that one or more other features or components may be added. Furthermore, in the drawings, the size of components may be exaggerated or reduced for convenience of description. For example, since the size and thickness of each component shown in the drawings are arbitrarily shown for convenience of explanation, the present disclosure is not necessarily limited to the illustration.

Hereinafter, embodiments of the present disclosure will be described in detail with reference to the accompanying drawings, and when described with reference to the drawings, the same or corresponding components are given the same reference numerals, and redundant descriptions thereof will be omitted.

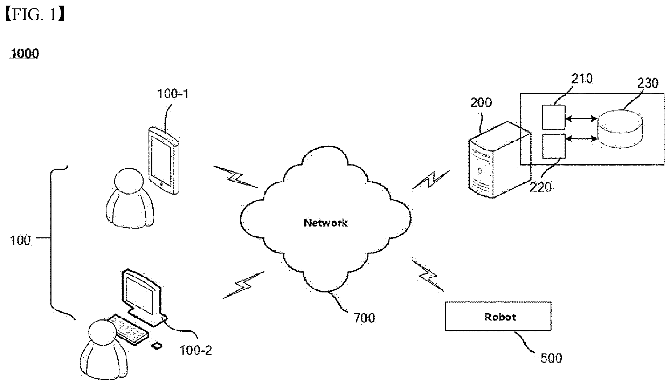

FIG. 1 is a conceptual diagram of a user interface providing system for map target creation according to one embodiment of the present disclosure.

Referring to FIG. 1, a user interface providing system 1000 for map target creation according to one embodiment of the present disclosure may implement a user interface providing service for map target creation (hereinafter, referred to as a map target user interface service) that provides a 3D map including at least one object classified and displayed in units of physical meaning and sets an object-based functional operation based on the provided 3D map.

In one embodiment, the user interface providing system 1000 for map target creation, which provides the above map target user interface service, may include a terminal 100, a database server 200, a robot 500, and a network 700.

In this case, the terminal 100, the database server 200 and the robot 500 may be connected through the network 700.

Here, the network 700 according to the embodiment refers to a connection structure capable of exchanging information between nodes such as the terminal 100, the database server 200, and/or the robot 500, and examples of the network 700 include a 3rd generation partnership project (3GPP) network, a long term evolution (LTE) network, a world interoperability for microwave access (WIMAX) network, the Internet, a local area network (LAN), and a wireless local area network (Wireless LAN)), a wide area network (WAN), a personal area network (PAN), a Bluetooth network, a satellite broadcasting network, an analog broadcasting network, a digital multimedia broadcasting (DMB) network, and the like, but are not limited thereto.

Hereinafter, the terminal 100, the database server 200, and the robot 500 implementing the user interface providing system 1000 for map target creation will be described in detail with reference to the accompanying drawings.

### (Terminal 100)

The terminal 100 according to one embodiment of the present disclosure may be a computing device in which a map target application (hereinafter, referred to as application) for providing a map target user interface service is installed.

As an exemplary implementation, the application of the terminal 100 may acquire and output an image of the robot 500 and/or another terminal 100 through a display device, receive a user input corresponding to the image, and generate virtual content corresponding to the image according to the received user input.

In addition, the application may receive data from a sensor system in the physical space of the image or a previously matched virtual content source, and generate virtual content in which the received data is matched with the image.

Further, the application may provide an augmented reality environment to the user by overlaying and outputting the virtual content generated in this way to an image output from the display device.

Furthermore, the application may provide the generated virtual content to an external computing device (e.g., another terminal 100, the robot 500, and/or the database server 200, etc.) through a communication processor.

Specifically, from a hardware point of view, the terminal 100 may include a mobile type computing device 100-1 and/or a desktop type computing device 100-2 in which the application is installed.

Here, the mobile type computing device 100-1 may be a mobile device such as a smartphone or a tablet PC in which the application is installed.

For example, the mobile type computing device 100-1 may include a smartphone, a mobile phone, a digital broadcasting device, a personal digital assistant (PDA), a portable multimedia player (PMP), a tablet PC, and the like.

In addition, the desktop type computing device 100-2 may include a device in which a program for executing the map target user interface service based on wired/wireless communication is installed, such as a personal computer including a fixed desktop PC, a laptop computer, and an ultrabook in which the application is installed.

Further, according to one embodiment, the terminal 100 may further include a server computing device that provides a map target user interface service environment.

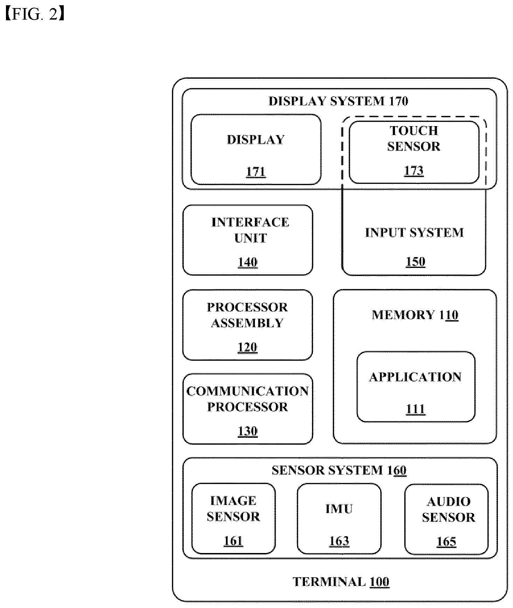

FIG. 2 is an internal block diagram of the terminal 100 according to one embodiment of the present disclosure.

Referring to FIG. 2, from a functional point of view, the terminal 100 may include a memory 110, a processor assembly 120, a communication processor 130, an interface unit 140, an input system 150, and a sensor system 160 and a display system 170. These components may be configured to be included in a housing of the terminal 100.

Specifically, an application 111 is stored in the memory 110, and the application 111 may store one or more of various application programs, data, and instructions for providing a map target user interface service environment.

That is, the memory 110 may store instructions and data that may be used to create the map target user interface service environment.

Furthermore, the memory 110 may include a program area and a data area.

Here, the program area according to the embodiment may be linked between an operating system (OS) for booting the terminal 100 and functional elements, and the data area may store data generated according to the use of the terminal 100.

In addition, the memory 110 may include at least one non-transitory computer-readable storage medium and a transitory computer-readable storage medium.

For example, the memory 110 may be various storage devices such as ROM, EPROM, flash drive, hard drive, and the like, and include a web storage that performs the storage function of the memory 110 on the Internet.

The processor assembly 120 may include at least one processor capable of executing instructions of the application 111 stored in the memory 110 to perform various tasks for creating the map target user interface service environment.

In one embodiment, the processor assembly 120 may control overall operations of components through the application 111 of the memory 110 to provide the map target user interface service.

The processor assembly 120 may be a system on chip (SOC) suitable for the terminal 100 including a central processing unit (CPU) and/or a graphics processing unit (GPU), and may execute the operating system (OS) and/or application programs stored in the memory 110, and control each component mounted to the terminal 100.

In addition, the processor assembly 120 may internally communicate with each component through a system bus, and include one or more bus structures including a local bus.

Further, the processor assembly 120 may be implemented to include at least one of ASICs (application specific integrated circuits), DSPs (digital signal processors), DSPDs (digital signal processing devices), PLDs (programmable logic devices), FPGAs (field programmable gate arrays), controllers, micro-controllers, microprocessors, and electrical units for performing other functions.

The communication processor 130 may include one or more devices for communicating with an external device. Such a communication processor 130 may communicate through a wireless network.

Specifically, the communication processor 130 may communicate with a computing device that stores a content source for implementing the map target user interface service environment, and may communicate with various user input components such as a controller that receives a user input.

In one embodiment, the communication processor 130 may transmit and receive various data related to the map target user interface service to and from another terminal 100, the database server 200, and/or the robot 500, and the like.

The communication processor 130 may wirelessly transmit and receive data to and from at least one of a base station, an external terminal 100, and an arbitrary server on a mobile communication network established through a communication system that can perform technical standards or communication methods for mobile communication (e.g., LTE (Long Term Evolution), LTE-A (Long Term Evolution-Advanced), 5G NR (New Radio), WIFI), or short-range communication method, and the like.

The sensor system 160 may include various sensors such as an image sensor 161, a position sensor (IMU) 163, an audio sensor 165, a distance sensor, a proximity sensor, and a contact sensor.

In this case, the image sensor 161 may capture an image and/or video of a physical space around the terminal 100.

In one embodiment, the image sensor 161 may capture and acquire an image (e.g., an image of a 3D space) related to the map target user interface service.

In addition, the image sensor 161 may be disposed on a front or/and a rear surface of the terminal 100 to capture an image by photographing the side on which the image sensor 161 is disposed, and may photograph the physical space through a camera disposed on the terminal 100 to be directed outward.

The image sensor 161 may include an image sensor device and an image processing module. Specifically, the image sensor 161 may process still images or moving images captured by the image sensor device (e.g., CMOS or CCD).

Further, the image sensor 161 may extract necessary information by processing a still image or moving image acquired through an image sensor device using the image processing module, and transmit the extracted information to the processor.

The image sensor 161 may be a camera assembly including one or more cameras. The camera assembly may include a general camera that captures a visible light band, and may further include a special camera such as an infrared camera, a stereo camera, or the like.

Furthermore, depending on embodiments, the image sensor 161 as described above may be included and operated in the terminal 100 , or included in an external device (e.g., an external server and/or the robot 500, etc.) and operated through interworking with the communication processor 130 and/or the interface unit 140.

The position sensor (IMU) 163 may detect at least one of motion and acceleration of the terminal 100. For example, the position sensor (IMU) 163 may be made of a combination of various position sensors such as an accelerometer, a gyroscope, and a magnetometer.

In addition, the position sensor (IMU) 163 may recognize spatial information about a physical space around the terminal 100 by interworking with a location communication processor 130 such as a GPS of the communication processor 130.

The audio sensor 165 may recognize sounds around the terminal 100.

Specifically, the audio sensor 165 may include a microphone capable of detecting a voice input of a user using the terminal 100.

In one embodiment, the audio sensor 165 may receive voice data required for a map target user interface service from the user.

The interface unit 140 may communicatively connect the terminal 100 with one or more other devices. Specifically, the interface unit 140 may include a wired and/or wireless communication device compatible with one or more different communication protocols.

Through this interface unit 140, the terminal 100 may be connected to various input/output devices.

For example, the interface unit 140 may be connected to an audio output device such as a headset or a speaker to output audio.

Although it has been described that the audio output device is connected to the terminal 100 through the interface unit 140 as an example, the audio output device may be installed in the terminal 100 depending on embodiments.

In addition, for example, the interface unit 140 may be connected to an input device such as a keyboard and/or a mouse to obtain a user input.

Although it has been described that the keyboard and/or the mouse are connected to the terminal 100 through the interface unit 140 as an example, the keyboard and/or the mouse may be installed in the terminal 100 depending on embodiments.

The interface unit 140 may include at least one of a wired/wireless headset port, an external charger port, a wired/wireless data port, a memory card port, a port for connection with a device equipped with an identification module, an audio I/O (input/output) port, a video I/O (input/output) port, an earphone port, a power amplifier, an RF circuit, a transceiver, and other communication circuits.

The input system 150 may detect a user's input (e.g., gestures, voice commands, button manipulations, or other types of input) related to the map target user interface service.

Specifically, the input system 150 may include a predetermined button, a touch sensor, and/or an image sensor 161 that receives a user's motion input.

In addition, the input system 150 may be connected to an external controller through the interface unit 140 to receive a user's input.

The display system 170 may output various information related to the map target user interface service as a graphic image.

As an example, the display system 170 may display a captured image a key frame, a 3D map, object information, and/or various user interfaces.

The display 171 may include at least one of a liquid crystal display (LCD), a thin film transistor-liquid crystal display (TFT LCD), an organic light-emitting diode (OLED), a flexible display, a 3D display, and an electronic ink display (e-ink display).

The above components may be disposed in the housing of the terminal 100, and the user interface may include a touch sensor 173 on the display 171 configured to receive a user's touch input.

Specifically, the display system 170 may include a display 171 for outputting an image, and a touch sensor 173 for detecting a user's touch input.

For example, the display 171 may be implemented as a touch screen in which the display 171 is formed in a layered structure with the touch sensor 173 or integrally with the touch sensor 173. The touch screen may function as a user input unit that provides an input interface between the terminal 100 and the user, and may provide an output interface between the terminal 100 and the user.

Meanwhile, the terminal 100 according to one embodiment of the present disclosure may perform various functional operations required for the map target user interface service using at least one disclosed algorithm.

As an example, the terminal 100 may perform various functional operations required for the map target user interface service based on various algorithms for performing feature point detection and/or semantic segmentation.

In addition, depending on embodiments, the terminal 100 may further perform at least a part of functional operations performed by the database server 200 and/or the robot 500 to be described later.

### (Database server 200)

Meanwhile, the database server 200 according to one embodiment of the present disclosure may perform a series of processes for providing the map target user interface service.

Specifically, in one embodiment, the database server 200 may provide the map target user interface service by exchanging data necessary for driving the process of providing a user interface for map target creation in an external device such as the terminal 100 and/or the robot 500 with the external device.

More specifically, in one embodiment, the database server 200 may provide an environment in which the application 111 can operate in an external device (the mobile type computing device 100-1, the desktop type computing device 100-2, and/or the robot 500 in the embodiment).

To this end, the database server 200 may include an application program, data, and/or instructions for operating the application 111, and may transmit and receive data based thereon to and from the external device.

In addition, in one embodiment, the database server 200 may acquire a captured image.

Specifically, the database server 200 may acquire an image captured by photographing a 3D space through interworking with the terminal 100 and/or the robot 500 according to one embodiment of the present disclosure.

Furthermore, in one embodiment, the database server 200 may extract a key frame of the captured image.

In this case, the key frame may refer to a frame determined as a core frame according to a predetermined criterion among all frames constituting the captured image.

In addition, in one embodiment, the database server 200 may detect a feature point in the extracted key frame.

Specifically, the database server 200 may detect a plurality of feature points in the key frame through interworking with a feature detector.

Further, in one embodiment, the database server 200 may create a 3D map based on the extracted feature points.

Furthermore, in one embodiment, the database server 200 may generate object information for each of at least one object in the key frame.

In this case, the object information may include class IDs of objects n the key frame classified and/or object area information indicating an area occupied by each of the objects, and a detailed description thereof will be described later.

Further, in one embodiment, the database server 200 may map the generated object information to the 3D map.

In addition, in one embodiment, the database server 200 may display object information mapped on the 3D map.

Furthermore, in one embodiment, the database server 200 may provide an object function setting interface based on the 3D map.

In this case, the object function setting interface may be a user interface through which a user can select a specific object (or a specific object type) having object information in the 3D map, and set an execution function to be implemented for the selected specific object (or specific object type).

In addition, in one embodiment, the database server 200 may implement an execution function set for the specific object (or specific object type) in the 3D map based on a user's input using the provided object function setting interface.

Further, in one embodiment, the database server 200 may perform a functional operation required for the map target user interface service using at least one disclosed algorithm.

As an example, the database server 200 may perform various functional operations required for the map target user interface service based on various algorithms for performing the feature point detection and/or the semantic segmentation.

More specifically, in one embodiment, the database server 200 may read an algorithm driving program built to perform the above functional operation from a memory module 230, and perform a corresponding function operation according to the read algorithm program.

In this case, depending on embodiments, the above-described algorithm may be directly included in the database server 200 or implemented in a device and/or server separate from the database server 200 to operate a function for the map target user interface service.

In the following description, it is described that the algorithm is included and implemented in the database server 200, but the present disclosure is not limited thereto.

In addition, in one embodiment, the database server 200 may store and manage various application programs, instructions, and/or data for implementing the map target user interface service.

As an example, the database server 200 may store and manage one or more captured images, key frames, feature points, 3D maps, object information, and various user interfaces, and/or algorithms required for the map target user interface service.

Meanwhile, further referring to FIG. 1, in one embodiment, the database server 200 may be implemented as a computing device including at least one processor module 210 for data processing, at least one communication module 220 for data exchange with an external device, and at least one memory module 230 storing various application programs, data and/or instructions for providing the map target user interface service.

In this case, the memory module 230 may store one or more of an operating system (OS), various application programs, data, and instructions for providing the map target user interface service.

Further, the memory module 230 may include a program area and a data area.

In this case, the program area according to one embodiment may be linked between the operating system (OS) for booting the server and functional elements, and the data area may store data generated according to the use of the server.

In one embodiment, the memory module 230 may be a variety of storage devices such as ROM, RAM, EPROM, flash drive, hard drive, and the like, and may be a web storage that performs the storage function of the memory module 230 on the Internet.

Further, the memory module 230 may be a recording medium attachable to and detachable from the server.

Meanwhile, the processor module 210 may control the overall operation of each unit described above to implement the map target user interface service.

The processor module 210 may be a system on chip (SOC) suitable for the server including a central processing unit (CPU) and/or a graphics processing unit (GPU), and may execute the operating system (OS) and/or application programs stored in the memory module 230 and control each component mounted to the server.

In addition, the processor module 210 may internally communicate with each component through a system bus, and include one or more bus structures including a local bus.

Further, the processor module 210 may be implemented by using at least one of ASICs (application specific integrated circuits), DSPs (digital signal processors), DSPDs (digital signal processing devices), PLDs (programmable logic devices), FPGAs (field programmable gate arrays), controllers, micro-controllers, microprocessors, and electrical units for performing other functions.

In the above description, it has been described that the database server 200 according to one embodiment of the present disclosure performs the functional operation as described above, but depending on embodiments, at least a part of the functional operations performed by the database server 200 may be performed by an external device (e.g., the terminal 100 and/or the robot 500, etc.), or at least a part of the functional operations performed in the external device may be further performed in the database server 200.

### (Robot 500)

The robot 500 according to one embodiment of the present disclosure may be an intelligent robot 500 that autonomously operates by perceiving the external environment and cognizing the situation by itself.

In this case, the situation cognition function of the robot 500 may include an environment perception function and a location perception function, and the autonomous operation function may include a manipulation control function and an autonomous movement function.

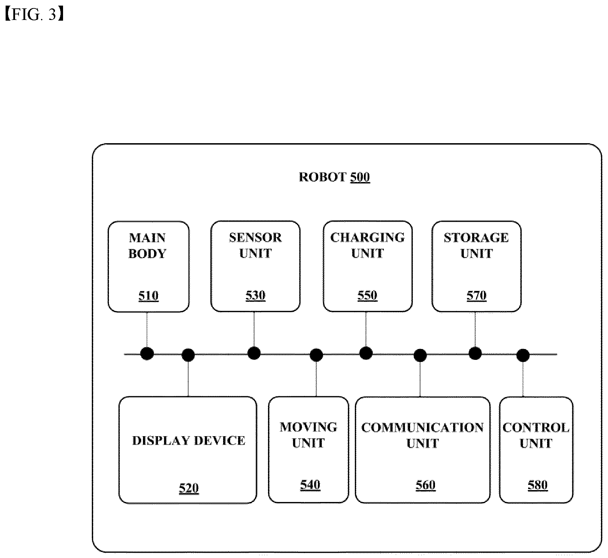

FIG. 3 is an internal block diagram of the robot 500 according to one embodiment of the present disclosure.

Hereinafter, components constituting the robot 500 according to one embodiment of the present disclosure will be described in detail with reference to the accompanying drawings.

However, the components shown in FIG. 3 are not essential for the robot 500, so the robot 500 may be implemented with more or fewer components.

Referring to FIG. 3, in one embodiment of the present disclosure, the robot 500 may include a main body 510, a display device 520, a sensor unit 530, a moving unit 540, a charging unit 550, and a communication unit 560, a storage unit 570, and a control unit 580.

Specifically, the main body 510 of the robot 500 forms the appearance of the robot 500, and may include various interior/exterior units necessary for driving the robot 500.

In one embodiment, the main body 510 may include a fixing unit (e.g., including a fixing base, a tightening screw, and/or a fixing base direction changing motor) capable of detachably fixing the display device 520 to be described later. In this case, the fixing unit may further include a gimbal device for minimizing deterioration in quality of an image captured by the mounted display device 520 due to shaking.

Further, the display device 520 may output a graphic image related to the map target user interface service.

Specifically, in one embodiment, the display device 520 may include a display communication processor, a display control processor, a display monitor, a display camera, and a display battery.

More specifically, the display communication processor may transmit and receive various data necessary for the map target user interface service to and from an external computing device (in the embodiment, another robot 500, the terminal 100, and/or the database server 200, etc.).

In addition, the display control processor may control each component of the display device 520 to provide the map target user interface service.

Further, the display monitor may display various types of data required for the map target user interface service as graphic images.

The display monitor may include at least one of a touch screen, a liquid crystal display (LCD), a thin film transistor-liquid crystal display (TFT LCD), an organic light-emitting diode (OLED), a flexible display, a 3D display, and an e-ink display.

Furthermore, the sensor unit 530 may acquire sensing data required for the map target user interface service.

As an example, the sensor unit 530 may include at least one sensor that senses an area around the robot 500 while rotating 360 degrees.

Specifically, in one embodiment, the sensor unit 530 may be implemented by including an image sensor, an object detection sensor, and an environment detection sensor.

In this case, the image sensor may photograph an external object to acquire an image (still image and/or moving image) including the shape of the object.

In addition, the image sensor may process the acquired image by converting the image into an electrical signal, and transmit it to the display device 520 or the storage unit 570.

In one embodiment, the image sensor may collect and provide images captured by photographing a work site in real time.

For example, the image sensor may be implemented as a Nexx 360 neckband camera, and may capture and provide a 360-degree photographed image therethrough.

Further, in one embodiment, the object detection sensor may detect a distance to a surrounding object.

In one embodiment, the object detection sensor may include a LiDAR sensor (e.g., a VLP-16 sensor and/or a laser sensor), and/or a RADAR sensor.

In this case, the LiDAR sensor is a radar system that emits a laser pulse and measures the time it takes for the laser pulse to be reflected by a reflector and returned (Time-of-Flight methodology) to measure positional coordinates of the reflector. For example, the VLP-16 sensor may collect and provide its own position information according to a radius r, an altitude ω, and an azimuth angle α of spherical coordinates.

In one embodiment, the LiDAR sensor may acquire a point data set in real time according to laser emission on a surrounding object and scan the surrounding environment.

In addition, the RADAR sensor may emit radio frequencies to sense distance information to a surrounding object.

Further, in one embodiment, the environment sensor may detect gas data, smoke data, heat data, and/or sound data in the surrounding environment.

As an example, the environment sensor may include a gas sensor for sensing gas data of the surrounding environment, a heat (temperature) sensor for sensing heat data, and/or an image sensor for sensing smoke data and/or sound data.

Meanwhile, the moving unit 540 of the robot 500 may allow the robot 500 to move to a position under the control of a user or a processor.

In one embodiment, the moving unit 540 may include a wheel-type moving device and/or a walking-type moving device.

In this case, the wheel-type moving device may include at least two driving wheels (e.g., left/right driving wheels, etc.) for movement of the robot 500, and the driving wheels may be disposed on at least a portion of a lower part of the robot 500. The driving wheels may be configured to rotate by at least one motor each of which is operated by the processor, and allow the robot 500 to move while changing the moving direction according to the driving of the motor.

In addition, the walking-type moving device may include at least two leg-type supports for movement of the robot 500 (e.g., a left first and/or second leg-type support and a right first and/or second leg-type support, etc.), and each of the leg-type supports may allow the robot 500 to walk while changing the moving direction by at least one motor each of which is operated under the control of the processor.

In addition, the charging unit 550 may receive external power and/or internal power under the control of the processor to supply power required for operation to each component.

For example, the charging unit 550 may include at least one of a power storage unit 570, a connection port, a power supply control unit 580, and a charging monitoring unit.

In addition, the communication unit 560 may include one or more devices (e.g., a communication processor, etc.) for communicating with an external computing device (in one embodiment, another robot 500, the terminal 100, and/or the database server 200, etc.).

The communication unit 560 may transmit/receive radio signals with at least one of a base station, an external terminal 100 and/or a server on a mobile communication network built according to technical standards or communication methods for mobile communication (e.g., GSM (Global System for Mobile communication), CDMA (Code Division Multi Access), HSDPA (High Speed Downlink Packet Access), HSUPA (High Speed Uplink Packet Access), LTE (Long Term Evolution), LTE-A (Long Term Evolution-Advanced, etc.).

In addition, the storage unit 570 may store one or more of an operating system (OS), various application programs, data, and instructions for providing the map target user interface service.

In one embodiment, the storage unit 570 may store and manage an information collection program based on the robot 500.

In this case, the storage unit 570 may include a program area and a data area.

The program area according to one embodiment may be linked between the operating system (OS) for booting the robot 500 and functional elements, and the data area may store data generated according to the use of the robot 500.

Further, in some embodiments, software components stored in the storage unit 570 may include an operating system, a communication module (or set of instructions), contact/motion module (or set of instructions), a graphics module (or set of instructions), a text input module (or set of instructions), a global positioning system (GPS) module (or set of instructions), and application programs (or sets of instructions).

In one embodiment, the storage unit 570 may be a variety of storage devices such as ROM, RAM, EPROM, flash drive, hard drive, and the like, and may also be a web storage that performs the storage function of the storage unit 570 on the Internet.

Further, the storage unit 570 may be a recording medium attachable to and detachable from the robot 500.

In addition, the control unit 580 may control the overall operation of each unit described above to implement the map target user interface service.

The control unit 580 may be a system on chip (SOC) suitable for the robot 500 including a central processing unit (CPU) and/or a graphics processing unit (GPU), and may execute the operating system (OS) and/or the program of the application 111 stored in the storage unit 570, and include one or more processors capable of controlling each component mounted on the robot 500.

In addition, the control unit 580 may communicate internally with each component through a system bus, and include one or more bus structures including a local bus.

Further, the control unit 580 may be implemented using at least one of ASICs (application specific integrated circuits), DSPs (digital signal processors), DSPDs (digital signal processing devices), PLDs (programmable logic devices), FPGAs (field programmable gate arrays), controllers, micro-controllers, microprocessors, and other electrical units for functional operations.

Hereinafter, various embodiments may be possible in such a way that at least some of the functional operations performed by the robot 500 according to one embodiment of the present disclosure to provide the map target user interface service may be performed in the terminal 100 and/or the database server 200 described above, and the robot 500 may further perform at least some of the functional operations performed by the terminal 100 and/or the database server 200.

### (Method of providing a user interface for map target creation)

Hereinafter, a method of providing a user interface for map target creation through the application 111 executed by at least one processor of the terminal 100 according to one embodiment of the present disclosure will be described in detail with reference to the accompanying drawings.

In one embodiment of the present disclosure, at least one processor of the terminal 100 may execute at least one application 111 stored in at least one memory 110 or operate in a background state.

Hereinafter, it is briefly described as being performed by the application 111 that the at least one processor operates to execute instructions of the application 111 and perform the method of providing a user interface for map target creation.

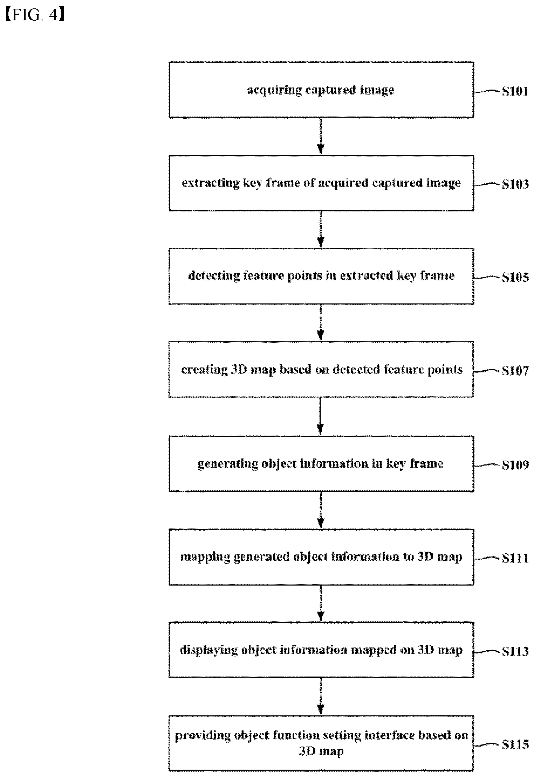

FIG. 4 is a flowchart illustrating the method of providing a user interface for map target creation according to one embodiment of the present disclosure.

Referring to FIG. 4, in one embodiment, the application 111 executed by at least one processor of the terminal 100 or operating in a background state may acquire a captured image (S101).

Specifically, in one embodiment, the application 111 may acquire an image captured by photographing a 3D space through interworking with the robot 500 and/or the database server 200 described above.

In this case, while moving in a 3D space, the robot 500 according to the embodiment may sense the surrounding 3D space environment based on the sensor unit 530 to acquire the captured image.

In addition, the robot 500 may provide the captured image to an external computing device (e.g., the terminal 100 and/or the database server 200 in one embodiment).

Accordingly, in the embodiment, the application 111 may acquire the captured image taken by the robot 500 from the robot 500 and/or the database server 200.

Further, in one embodiment, the application 111 may extract a key frame of the captured image (S103).

In this case, the key frame according to the embodiment may refer to a frame determined as a core frame according to a predetermined criterion among all frames constituting the captured image.

For example, the key frame may be at least one frame according to a predetermined interval in all frames and/or at least one frame in which a change is detected.

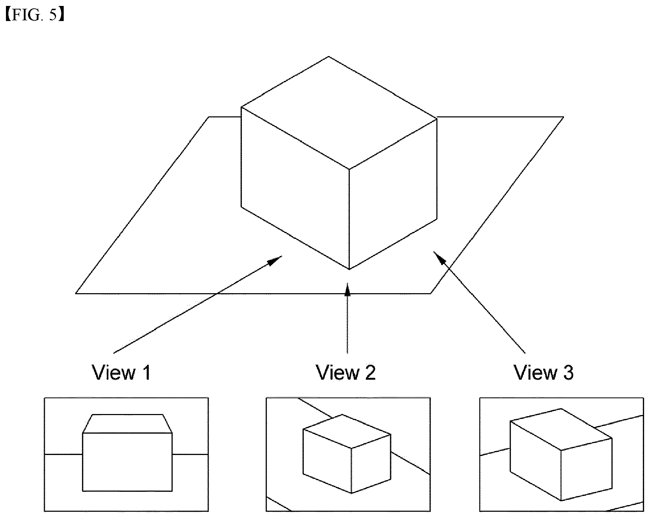

FIG. 5 is an example of a diagram for explaining a multi-view key frame according to one embodiment of the present disclosure.

In one embodiment, referring to FIG. 5, at least one key frame may be a multi-view key according to a positional change of the robot 500 (or the sensor unit 530) when the corresponding key frame is acquired.

Furthermore, in one embodiment, the key frame may include a posture (e.g., position and/or orientation information) of the robot 500 (or the sensor unit 530) and sensed 2D image information when the corresponding key frame is acquired.

In this way, the application 111 can improve data processing efficiency and speed of functional operations, to be described later, for the map target user interface service by extracting a key frame that is a core frame from among a plurality of frames constituting the captured image.

In addition, in one embodiment, the application 111 may detect feature points in the extracted key frame (S105).

Specifically, in one embodiment, the application 111 may detect a plurality of feature points in the key frame in conjunction with a predetermined feature detector.

Here, the feature detector according to the embodiment may detect a predetermined feature (e.g., edge and/or corner) point in the key frame as the feature point.

In this case, the feature detector may also calculate a descriptor capable of specifying each of the detected feature points for the feature points.

For reference, the descriptor is obtained by dividing pixels around a corresponding feature point into blocks of a certain size and calculating a gradient histogram of pixels belonging to each block, and may mainly include information such as brightness, color, direction, and/or size around the feature point.

The feature detectors may be implemented based on algorithms such as FastFeatureDetector, MSER, SimpleBlobDetector, and/or GFTTDetector, for example. However, these are only examples and the present disclosure is not limited thereto.

In addition, in one embodiment, the application 111 may create a 3D map based on the detected feature points (S107).

Specifically, in one embodiment, the application 111 may create a 3D map by mapping the plurality of detected feature points onto 3D spatial coordinates.

More Specifically, in one embodiment, the application 111 may create a 3D map according to the 3D spatial coordinates by mapping each of the plurality of feature points detected from multi-view key frames obtained according to the movement of the robot 500 (or the sensor unit 530) with the posture (in one embodiment, position and/or orientation information) of the robot 500 (or the sensor unit 530) at the time of acquiring the corresponding key frame.

In addition, in one embodiment, the application 111 may generate object information in the key frame (S 109).

In this case, the object information according to the embodiment may include object area information and the like indicating class IDs (e.g., box = 0, desk = 1, etc.) to which the object in the key frame is classified and/or the area occupied by the object.

Specifically, in one embodiment, the application 111 may generate object information for each of at least one object in the key frame by performing semantic segmentation based on the key frame.

For reference, the semantic segmentation is a deep learning algorithm for detecting an object in an image in actually perceivable units of physical meaning, and specifically, may be a deep learning algorithm in which at least one object in an image is divided into meaningful units to be detected, and information on a class representing a category (e.g., box, desk, etc.) to which each detected object (i.e., pixels constituting each object) belongs and information on an area occupied by the object are provided.

More specifically, in one embodiment, the application 111 may detect at least one object (hereinafter, a key object) in the key frame by performing semantic segmentation on the key frame.

Further, in one embodiment, the application 111 may obtain class information and occupied area information for each of one or more detected key objects based on the semantic segmentation.

That is, the application 111 may acquire class information indicating a category (type) of each of the one or more detected key objects classified and occupied area information indicating the area occupied by each key object by performing semantic segmentation.

Furthermore, in one embodiment, the application 111 may generate a class ID for the corresponding key object based on the obtained class information, and generate object area information for the corresponding key object based on the obtained occupied area information.

In this case, depending on embodiments, the application 111 may assign different identification codes according to categories represented by the acquired class information, and may set the assigned identification code as the class ID for the corresponding key object.

For example, the application 111 may assign an identification code depending on the category of the corresponding class information, such as '0' when the class information is 'box', and '1' when 'desk', and set the identification code as the class ID for the corresponding key obj ect.

That is, in one embodiment, by detecting an area for each object in the key frame and performing semantic segmentation to implement categorization for each object simultaneously, the application 111 can acquire class ID and/or object area information for each of one or more key objects in the corresponding key frame may be obtained and based on this , and generate object information for each corresponding key object based thereon.

In addition, in one embodiment, the application 111 may map the generated object information to the 3D map (S111).

Specifically, in one embodiment, the application 111 may map object information generated for each key object in the key frame to the generated 3D map.

More specifically, in one embodiment, the application 111 may detect an object (hereinafter, a map object) corresponding to the key object in the 3D map.

For example, the application 111 may detect a map object corresponding to the key object based on the object area information of the key object and the 3D spatial coordinates of the 3D map, and may detect a plurality of feature points corresponding to the object area information of the key object from the 3D map to detect a map object corresponding to the key obj ect.

In addition, in one embodiment, the application 111 may mutually map the detected map object and object information of a key object corresponding to the map object.

In this case, the application 111 may extract a plurality of feature points constituting the map object from among a plurality of feature points in the 3D map.

Further, the application 111 may group the extracted feature points to correspond to the corresponding map object.

Furthermore, the application 111 may mutually map a plurality of feature points (hereinafter, map object feature points) grouped with respect to the map object and object information of a key object corresponding to the map object.

Accordingly, the application 111 may map object information corresponding to each map object corresponding to each of the key objects in the 3D map.

In this way, by designating an object corresponding to each feature point group in the 3D map and implementing a 3D map that includes both classified category (type) information of the object and information on the area occupied by the object, the application 111 can improve process performance in detecting and/or tracking a particular kind of object based on the 3D map.

In addition, in one embodiment, the application 111 may display object information mapped on the 3D map (S 113).

Specifically, in one embodiment, the application 111 may display, on the 3D map, object information mapped to each map object in the 3D map.

In this case, the application 111 may display the object information by classifying it according to the class ID and/or object area information of the object information mapped to each map object.

That is, the application 111 may display object information for each of the one or more map objects by classifying the object information for each area occupied by the corresponding map object on the 3D map according to the category (type) to which the corresponding map object belongs.

For example, the application 111 may display a first object area of a first map object on the 3D map in a color and/or pattern matched to a first class ID representing the type of the first map object, and display a second object area of a second map object on the 3D map in a color and/or pattern matched to a second class ID representing the type of the second map object.

Accordingly, the application 111 enables the user to intuitively distinguish and recognize each of one or more map objects existing on the 3D map, and easily select a desired map object among them to readily perform function setting for a specific object (or specific object type), which will be described later.

Further, in one embodiment, the application 111 may provide an object function setting interface based on the 3D map (S 115).

In this case, the object function setting interface according to the embodiment may be a user interface capable of selecting a specific map object (or specific object type) having object information in the 3D map, and setting an execution function to be implemented for the selected specific map object (or specific object type).

Specifically, in one embodiment, the application 111 may provide the user with the object function setting interface as described above.

In addition, in one embodiment, the application 111 may implement an execution function for a map object in the 3D map based on a user's input through the provided object function setting interface.

More specifically, in one embodiment, the application 111 may acquire a user's input which, through the object function setting interface, selects any one among one or more map objects which are divided and displayed according to corresponding object information in the 3D map and/or a map object classified into any one class.

Further, in one embodiment, the application 111 may acquire a user's input for setting an execution function to be implemented for the selected map object (hereinafter, a target object) through the object function setting interface.

For example, the application 111 may acquire a user's input for setting an execution function such as outputting predetermined augmented reality content or designating a predetermined waypoint with respect to the target object.

In this case, depending on embodiments, the application 111 may separately extract and store only information related to the target object (e.g., map object feature points, class ID, and/or object area information for the corresponding target object).

In addition, the application 111 may provide the separately stored information of the target object to the user through the object function setting interface so that the user may set an execution function for the corresponding target object.

That is, the application 111 can intensively extract only the information related to the target object desired by the user and provide it to the user, so that the user may set the execution function for the target object based on the provided information, which allows user interaction to be implemented on a simpler and organized interface.

Further, in one embodiment, the application 111 may implement the acquired execution function according to the user's input.

As an example, the application 111 may perform an execution function set for the 3D map target object based on interworking with an external computing device and/or its own process.

For example, the application 111 may operate an execution function of augmenting and displaying an augmented reality content set for the target object in association with the corresponding target object.

In this way, the application 111 enables implementation of various services of the application 111 based on the 3D map (e.g., target object detection/tracking service, augmented reality content providing service, and/or map target (SLAM) service, etc.) based on a more intuitive and clear user interface by allowing the user to set the execution function for a desired map object (target object in the embodiment) based on the 3D map divided and displayed according to a class of each map object belongs and/or an area occupied by the corresponding obj ect.

As described above, in the user interface providing method and system for map target creation according to one embodiment of the present disclosure, by providing a 3D map including one or more objects classified and displayed in units of physical meaning, and setting the object-based functional operation based on the provided 3D map, various services of the application 111 based on the 3D map (e.g., target object detection/tracking service, augmented reality content providing service, and/or map target (SLAM) service, etc.) can be implemented based on a more intuitive and clear user interface.

In addition, in the user interface providing method and system for map target creation according to one embodiment of the present disclosure, by mapping an object for each feature point group in the 3D map and implementing the 3D map providing information on the classified category (type) and/or the occupied area of the corresponding object, process performance when detecting and/or tracking a specific object (or specific object type) in the 3D map can be improved.

Further, in the user interface providing method and system for map target creation according to one embodiment of the present disclosure, by providing a user interface capable of setting various object-based functional operations based on the 3D map as described above, the user can easily identify each object in the map and select a desired specific object (or specific object type) to set the function operation based on the corresponding object.

The embodiments according to the present disclosure described above may be implemented in the form of program instructions that can be executed through various computer components, and may be recorded on a computer-readable recording medium. The computer-readable recording medium may include program instructions, data files, data structures, etc. alone or in combination. The program instructions recorded on the computer-readable recording medium may be specially designed and configured for the present disclosure, or may be known and available to those skilled in the art of computer software. Examples of the computer-readable recording medium include a hard disk, a floppy disk, a magnetic medium such as a magnetic tape, an optical recording medium such as CD-ROM and DVD, a magnetooptical medium such as a floptical disk, and hardware devices specially configured to store and execute program instructions, such as ROM, RAM, flash memory, and the like. Examples of the program instructions include not only machine language codes generated by a compiler, but also high-level language codes that can be executed by a computer using an interpreter or the like. The hardware device may be modified to one or more software modules to perform processing according to the present disclosure, and vice versa.

Specific implementations described in the present disclosure are examples, and do not limit the scope of the present disclosure in any way. For conciseness of the specification, description of conventional electronic components, control systems, software, and other functional aspects of the systems may be omitted. In addition, the connection of lines or connecting members between the components shown in the drawings represent functional connections and/or physical or circuit connections by way of example, and in actual devices, may be represented by various functional connections, physical connections, or circuit connections, which are replaceable or additional. Further, if a component is described without specific expression such as "essential" or "important", it may not be a component necessarily required for the application of the present disclosure.

In addition, the detailed description of the present disclosure has been described with reference to preferred embodiments of the present disclosure, it will be understood by those skilled in the art or those having ordinary knowledge in the art that the present disclosure may be variously modified and changed without departing from the spirit and the technical scope of the present disclosure described in the claims to be described later. Therefore, the technical scope of the present disclosure is not limited to the contents described in the detailed description of the specification, but should be defined by the claims.

## Claims

1. A method of providing a user interface for map target creation through a map target application executed by at least one processor of a terminal, the method comprising:
acquiring an image captured by photographing a 3D space;
extracting a key frame of the captured image;
detecting feature points in the extracted key frame;
generating a 3D map based on the detected feature points;
generating object information including class information and object area information for at least one key object in the key frame;
mapping the generated object information to the 3D map;
displaying the object information mapped on the 3D map; and
providing an object function setting interface based on the 3D map.

2. The method of claim 1, wherein the object function setting interface is a user interface for selecting a specific object or an object of a specific class from map objects in the 3D map and setting a function operation based on the selected map object.

3. The method of claim 1, wherein the extracting of the key frame comprises:
extracting a multi-view key frame according to a positional change of a sensor that senses the 3D space.

4. The method of claim 1, wherein the generating of the object information comprises:
generating object information for each key object by performing semantic segmentation based on the key frame.

5. The method of any one of the preceding claims, wherein the mapping of the object information to the 3D map comprises:
detecting a first map object corresponding to a first key object; and
mapping the detected first map object and object information of the first key object.

6. The method of claim 5, wherein the mapping of the object information to the 3D map further comprises:
extracting a first feature point group constituting the first map object from among a plurality of feature points in the 3D map; and
mapping the extracted first feature point group and the object information of the first key obj ect.

7. The method of any one of the preceding claims, wherein the displaying of the object information mapped on the 3D map comprises:
classifying the object information according to object information mapped to each map object in the 3D map; and
displaying classified object information.

8. The method of any one of the preceding claims, further comprising:
executing a map object-based functional operation set through the object function setting interface.

9. A system for providing a user interface for map target creation, the system comprising:
at least one display for outputting a 3D map;
at least one memory;
at least one processor; and
at least one application stored in the memory and executed by the processor to provide the user interface for map target creation,
wherein the at least one application is operated to:
acquire an image captured by photographing a 3D space;
extract a key frame of the captured image;
detect feature points in the extracted key frame;
generate a 3D map based on the detected feature points;
generate object information including class information and object area information for each key object in the key frame;
map the generated object information to the 3D map;
display the object information mapped on the 3D map; and
provide an object function setting interface based on the 3D map.

10. The system of claim 9, wherein the application is operated to extract a multi-view key frame according to a positional change of a sensor that senses the 3D space.
